# EUROPÄISCHE PATENTANMELDUNG

(11) **EP 0 990 422 A1**
(43) Veröffentlichungstag der Anmeldung: **05.04.2000**
(21) Anmeldenummer: 98118455.9
(22) Anmeldetag: 30.09.1998
(51) Int. Cl.: A61C 13/00

(54) **Temperiergerät für Wachsregistrate**

(71) Anmelder: Lehner, Bernard Dr., 66953 Pirmasens (DE); Lehner, Thomas Dr., 66953 Pirmasens (DE)
(72) Erfinder: Lehner, Bernard Dr., 66953 Pirmasens (DE); Lehner, Thomas Dr., 66953 Pirmasens (DE)
(74) Vertreter: Sandmann, Joachim, Dr.

(57) **Zusammenfassung**

Das erfindungsgemäße Temperiergerät arbeitet mit zirkulierender Warmluft, die thermostatisch gesteuert auf eine voreinstellbare Temperatur erwärmt wird. Es sind mehrere flache schalenförmige Schübe 26 vorgesehen, in die das zu erwärmende Wachsmaterial 27 eingelegt wird und die durch eine Gehäusewandöffnung 8, die mittels einer Verschlußklappe 9 verschließbar ist, in das Temperiergerät eingeschoben und aus diesem entnommen werden können. Ohne Betriebsunterbrechung des Temperiergeräts lassen sich die entnommenen Schübe bei passender Gelegenheit bequem reinigen und desinfizieren, was die Erfüllung der hygienischen Anforderungen begünstigt und einer Kontamination des Wachsmaterials 27 mit Fremdbakterien vorbeugt.

## Beschreibung

Die Erfindung betrifft ein Temperiergerät für Wachsregistrate mit einer thermostatisch gesteuerten Heizeinrichtung.

In zahnärztlichen Praxen werden Wachsplatten oder auch Wachsriegel unterschiedlicher Größe als Material für Registrate benutzt, also für Bißnahmen für die Zuordnung der Unterkiefer-Zahnreihe zur Oberkiefer-Zahnreihe. Diese Wachsregistrate müssen vor der Abdrucknahme erwärmt werden, was bisher in einem Wasserbad mit einer thermostatisch gesteuerten Heizeinrichtung bei ca. 50°C erfolgt.

Gegen ein solches, mit einem erwärmten Wasserbad arbeitendes Temperiergerät bestehen hygienische Bedenken. Nicht immer kann die Bißnahme in der gewünschten Weise zügig durchgeführt werden, und es ist daher nicht auszuschließen, daß das dem Patientenmund entnommene Registrat zwecks Nacherwärmung nochmals in das Wasserbad gegeben wird, wodurch es zu einer Verunreinigung des Wasserbades mit Bakterien kommt. Dementsprechend sollte nach jedem Gebrauch das Gerätewasser ausgetauscht und das Gerätebecken desinfiziert werden. Diese Maßnahme ist jedoch mit einem hohen Zeitaufwand verbunden. Deshalb ist nicht ausnahmslos gewährleistet, daß immer mit der gebotenen Sorgfalt vorgegangen und Verunreinigungen des Wasserbades wirksam begegnet wird.

Dementsprechend liegt der Erfindung die Aufgabe zugrunde, ein Temperiergerät für Wachsregistrate zu schaffen, das ein hygienisches Arbeiten ohne aufwendige und den Betriebsablauf störende Reinigungs- und Desinfektionsmaßnahmen ermöglicht.

Diese Aufgabe wird erfindungsgemäß gelöst durch ein kastenförmiges Gehäuse mit einer Verschlußklappe für eine Gehäusewandöffnung, hinter der mehrere entnehmbare Schübe in Schalenform zur Aufnahme jeweils eines Wachsregistrats angeordnet sind.

Zweckmäßige Ausgestaltungen und Weiterbildungen dieses Temperiergeräts ergeben sich aus den Unteransprüchen.

Beim erfindungsgemäßen Temperiergerät werden die Wachsplatten oder Wachsriegel nicht durch ein Wasserbad bzw. einen flüssigen Wärmeträger sondern mittels Warmluft oder auch durch direkte Mikrowellen-Erwärmung auf die erforderliche Anwendungstemperatur gebracht und gehalten. Das Wachsregistrat befindet sich dabei in einem schalenförmigen Schub und kommt mit anderen Geräteteilen nicht in Berührung. Dieser Schub läßt sich vollständig aus dem Temperiergerät herausnehmen, wozu ein separater Krallengriff vorgesehen sein kann. Dementsprechend lassen sich die Schübe leicht reinigen, ohne daß dazu der Betrieb des Temperiergeräts unterbrochen werden muß. Deswegen kann diese Reinigung ggf. auch zunächst zurückgestellt und in Zeiten geringerer Beanspruchung sowie ggf. gleichzeitig für mehrere Schübe nachgeholt werden. Unter der Voraussetzung, daß eine ausreichende Zahl von Schüben vorgesehen ist, stehen daher jederzeit die benötigten Wachsregistrate bei Anwendungstemperatur zur Verfügung.

Ersichtlich läßt sich mit dem erfindungsgemäßen Temperiergerät wesentlich hygienischer als mit einer Wasserbaderwärmung arbeiten, so daß der Gefahr einer Kontamination der Wachsregistrate mit Fremdbakterien vorgebeugt ist. Eine Infektion oder Übertragung von Krankheitserregern (AIDS, Hepatitis u.a.) ist somit nicht zu befürchten.

Ein Ausführungsbeispiel des erfindungsgemäßen Temperiergeräts wird nachfolgend anhand einer schematischen Zeichnung näher erläutert. Es zeigen:
- Figur 1: das geschlossene Temperiergerät in perspektivischer Darstellung von vorne;
- Figur 2: einen Vertikalschnitt durch das Temperiergerät längs Linie II-II in Figur 3; und
- Figur 3: einen Horizontalschnitt durch das Temperiergerät längs Linie III-III in Figur 2.

Das Temperiergerät weist ein kastenförmiges oder quaderförmiges Gehäuse 1 mit einer Vorderwand 2, Seitenwänden 3 und 4, einer Rückwand 5, einem mit Standfüßen (nicht dargestellt) versehenen Boden 6 und einer Deckwand 7 auf. Die Vorderwand 2 weist eine große Gehäusewandöffnung 8 auf, die durch eine Verschlußklappe 9 abgedeckt ist. Diese ist mittels zweier Scharnierteile 10 an die Vorderwand 2 angelenkt und mit einer Griffmulde 11 versehen. Die Schließstellung ist durch einen nicht dargestellten Magnetverschluß gesichert.

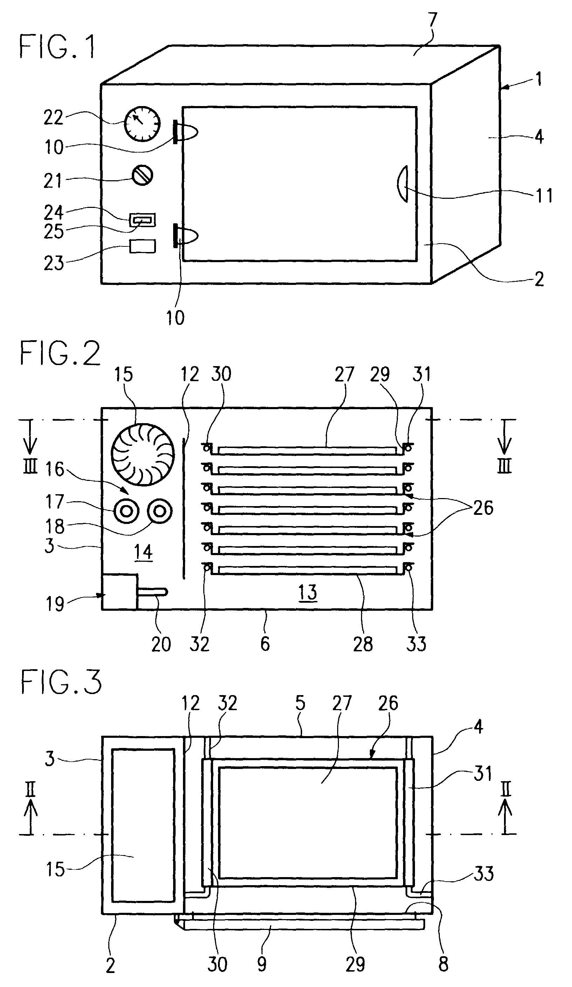

Wie aus Figuren 2 und 3 zu ersehen, ist der Innenraum des Gehäuses 1 durch eine vertikale Trennwand 12, die sich zwischen der Vorderwand 2 und der Rückwand 5 erstreckt, in eine Schübekammer 13 und eine Strömungskammer 14 unterteilt, die an ihren unteren Enden unterhalb der Trennwand 12 und an ihren oberen Enden oberhalb der Trennwand 12 miteinander in Verbindung stehen. Ein im oberen Bereich der Strömungskammer 14 horizontal angeordneter Ventilator 15 in Tangentialbauart bewirkt eine Luftumwälzung, bei der die Luft abwärts gerichtet durch die Strömungskammer 14 und aufwärts gerichtet durch die Schübekammer 13 strömt. Eine in der Strömungskammer 14 in Umwälzrichtung hinter dem Ventilator 15 angeordnete Heizeinrichtung 16, die gemäß der Darstellung in Figur 2 aus zwei sich horizontal zwischen der Vorderwand 2 und der Rückwand 5 erstreckenden Elektroheizstäben 17 und 18 besteht, sorgt für eine geregelte Erwärmung der umgewälzten Luft.

Eine nicht näher dargestellte Thermostatsteuerung 19 mit einem Temperaturfühler 20 und einem außenliegenden Drehknopf 21 ermöglicht eine Voreinstellung und Einhaltung der in der Schübekammer 13 gewünschten Temperatur innerhalb enger Grenzen. Beispielsweise ist eine Voreinstellung mittels des Drehknopfs 21 auf eine Temperatur innerhalb eines Bereichs von 30° bis 60°C vorgesehen, wobei die Temperaturspanne zwischen dem Ausschalten und dem Wiedereinschalten der Heizeinrichtung 16 nur wenige Grad beträgt, beispielsweise zwischen 2° und 5° C. Ein Thermometer 22 zeigt die jeweilige Temperatur an, während eine Signallampe 23 während des Betriebs der Heizeinrichtung 16 leuchtet. Ein Kippschalter 24 dient zum Ein- und Ausschalten des Gerätes und ist mit einer integrierten Signallampe 25 versehen, deren Aufleuchten den Netzanschluß und die eingeschaltete Stellung kenntlich macht.

Innerhalb der Schübekammer 13 sind mehrere schalenförmige Schübe 26 übereinander angeordnet. Beim dargestellten Ausführungsbeispiel sind insgesamt 7 Schübe vorgesehen. Diese Schübe 26 in Form flacher Schalen sind aus einem gut zu reinigenden bzw. zu desinfizierenden Material wie beispielsweise Edelstahl hergestellt. Die Schübe 26 dienen der Aufnahme des Ausgangsmaterials für Wachsregistrate und sind dementsprechend so bemessen, daß sie die handelsüblichen Wachsplatten 27 in einer Größe von 175 mm x 80 mm gut aufnehmen können. Höhere Wachsriegel oder Bißwälle können durch Weglassen bzw. Herausnehmen des nächsthöheren Schubs 26 ebenfalls aufgenommen werden. Zur verbesserten Kontaktierung der Wachsplatten 27 mit Warmluft sind die Schübe 26 mit Perforationen (nicht dargestellt) für den Luftdurchtritt versehen.

Die Schübe 26 weisen einen gegenüber dem Schalenboden 28 hochgezogenen Schalenrand 29 auf, der an den beiden Schmalseiten jeweils in einen Tragflansch 30 bzw. 31 übergeht. In eingeschobener Stellung liegen die Schübe 26 mit diesen Tragflanschen 30, 31 auf Tragstangen 32 und 33 auf, die sich von der Rückwand 5 ausgehend nach vorne erstrecken und mit ihren seitlich abgebogenen vorderen Enden an der Trennwand 12 bzw. an der Seitenwand 4 befestigt sind, wie es Figur 3 zeigt. Die Gehäusewandöffnung 8 in der Vorderwand 2 ist so dimensioniert und angeordnet, daß alle Schübe 26 bei voll geöffneter Verschlußklappe 9 leicht eingeschoben und auch wieder entnommen werden können.

## Patentansprüche

1. Temperiergerät für Wachsregistrate mit einer thermostatisch gesteuerten Heizeinrichtung (16), **gekennzeichnet** durch ein kastenförmiges Geräuse (1) mit einer Verschlußklappe (9) für eine Gehäusewandöffnung (8), hinter der mehrere entnehmbare Schübe (26) in Schalenform zur Aufnahme jeweils eines Wachsregistrats angeordnet sind.

2. Temperiergerät nach Anspruch 1, **dadurch gekennzeichnet,** daß eine Trennwand (12) die Gehäusekammer in eine Schübekammer (13) und eine Strömungskammer (14) unterteilt, die an entgegengesetzten Enden der Trennwand (12) miteinander in Verbindung stehen, und daß ein Ventilator (15) zur Umwälzung von Luft durch die Strömungskammer (14) und die Schübekammer (13) vorgesehen ist.

3. Temperiergerät nach Anspruch 2, **dadurch gekennzeichnet,** daß die Heizeinrichtung (16) in der Strömungskammer (14) angeordnet ist.

4. Temperiergerät nach einem der Ansprüche 1 bis 3, **dadurch gekennzeichnet,** daß die Schübe (26) so dimensioniert und in eingeschobener Stellung gelagert sind, daß sie allseitig Abstand zu den die Schübe (26) umschließenden Kammerwänden (2 bis 7, 12) aufweisen.

5. Temperiergerät nach einem der Ansprüche 1 bis 4, **dadurch gekennzeichnet,** daß die Schübe (26) stapelartig übereinander angeordnet sind.

6. Temperiergerät nach Anspruch 5, **dadurch gekennzeichnet,** daß die im Stapel benachbarten Schübe (26) mit Höhenabstand zueinander angeordnet sind.

7. Temperiergerät nach einem der Ansprüche 1 bis 6, **dadurch gekennzeichnet,** daß die schalenförigen Schübe (26) mit Perforationen für den Luftdurchtritt versehen sind.

8. Temperiergerät nach einem der Ansprüche 1 bis 7, **dadurch gekennzeichnet,** daß jeder Schub (26) sich mit Tragflanschen (30, 31) auf zwei seitlichen Tragstangen (32, 33) abstützt, die sich in Einschiebrichtung erstrecken.

9. Temperiergerät nach einem der Ansprüche 1 bis 8, **dadurch gekennzeichnet,** daß die Heizeinrichtung (16) eine Elektroheizung ist.

10. Temperiergerät nach Anspruch 1, **dadurch gekennzeichnet,** daß die Heizeinrichtung als Mikrowellenheizung ausgeführt ist.
